# EUROPEAN PATENT SPECIFICATION

(11) **EP 1 691 459 B1**
(45) Date of publication and mention of the grant of the patent: **15.11.2017**
(21) Application number: 06250784.3
(22) Date of filing: 14.02.2006
(51) Int. Cl.: H01T 1/00, H01J 17/16

(54) **Discharge tube**
Entladungsröhre
Tube à décharge

(30) Priority: 15.02.2005 JP 2005038012
(43) Date of publication of application: 16.08.2006
(73) Proprietor: SHINKO ELECTRIC INDUSTRIES CO., LTD., Nagano-shi, Nagano 381-2287 (JP)
(72) Inventor: Emori, Chisato, Nagano-shi Nagano 381-2287 (JP); Machida, Kazuhiko, Nagano-shi Nagano 381-2287 (JP); Takeuchi, Kesayuki, Nagano-shi Nagano 381-2287 (JP)
(74) Representative: Gill Jennings & Every LLP

(56) References cited:
- EP-A- 0 602 927
- EP-A2- 1 555 685
- JP-A- S5 968 165
- US-A- 4 538 202
- US-A1- 2004 150 346
- PATENT ABSTRACTS OF JAPAN vol. 016, no. 104 (E-1178), 13 March 1992 (1992-03-13) -& JP 03 283335 A (NEC CORP), 13 December 1991 (1991-12-13)
- PATENT ABSTRACTS OF JAPAN vol. 016, no. 104 (E-1178), 13 March 1992 (1992-03-13) -& JP 03 283336 A (NEC CORP), 13 December 1991 (1991-12-13)

## Description

### BACKGROUND OF THE INVENTION

### 1. Field of the Invention

The present invention relates to a discharge tube having a pair of discharge electrodes.

### 2. Description of the Related Art

In order to generate a discharge phenomenon in a space, it is necessary to apply a voltage exceeding a discharge starting voltage to the space. For this purpose, a circuit for generating a high-voltage trigger may be required. For example, an HID (High Intensity Discharge) recently used for a vehicle headlight and the like requires an ignition circuit for generating a high-voltage trigger used to start discharge. The ignition circuit is mainly configured with a capacitor for storing charge, a transformer for generating the high-voltage trigger, and a discharge tube (sometimes referred to as a switching discharge tube) for generating a stable power supply pulse (for example, refer to JP-A-2004-220808 and JP-A-2004-235017).

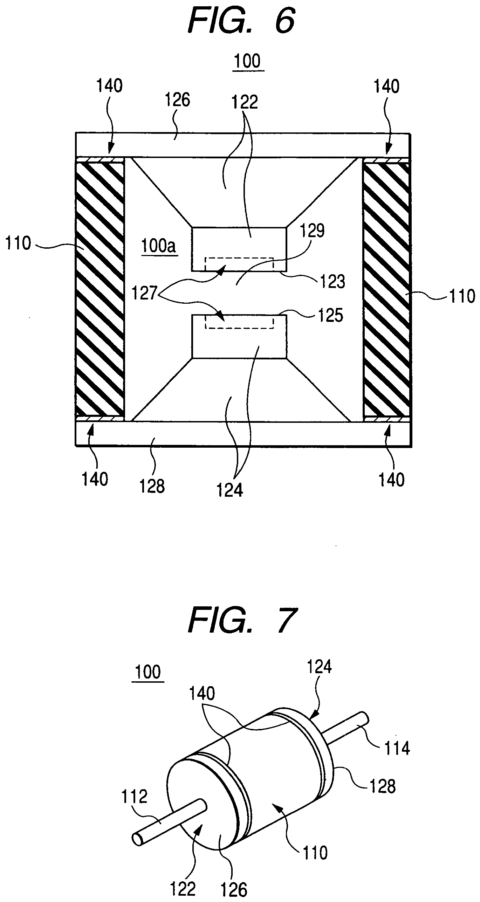

Figs. 6 and 7 show a discharge tube 100 as an exemplary discharge tube used in the related art. Fig. 6 is a cross-sectional view of the discharge tube 100, and Fig. 7 is a perspective view showing an external appearance of the discharge tube 100.

Referring to Figs. 6 and 7, the discharge tube 100 is roughly configured with an airtight cylinder 110, an upper discharge electrode 122, a lower discharge electrode 124, filler gas, and the like. The airtight cylinder 110 in which a discharge space 110a is formed has a cylindrical shape, and is formed of an insulating material such as a ceramic material.

An upper discharge electrode 122 and a lower discharge electrode 124 are attached at a top end opening and a bottom end opening of the airtight cylinder 110 respectively. The upper discharge electrode 122 and the lower discharge electrode 124 are integrally formed with a disc-shaped cap portion 126 and a disc-shaped cap portion 128, respectively.

A metalized face 140 is formed at the top end opening and the bottom end opening of the airtight cylinder 110. The cap portions 126 and 128 formed at the upper discharge electrode 122 and the lower discharge electrode 124 are brazed to the metalized face 140 formed at each opening of the airtight cylinder 110. Thus, the upper discharge electrode 122 and the lower discharge electrode 124 are attached to the airtight cylinder 110. When they are attached together, filler gas is sealed in the airtight cylinder 110. In this way, the discharge space 100a where the filler gas is sealed is formed in the airtight cylinder 110 by the airtight cylinder 110, the upper discharge electrode 122 and the lower discharge electrode 124.

The upper discharge electrode 122 protrudes from the cap portion 126 toward a center position of the airtight cylinder 110, and its tip portion is formed in a cylindrical shape having small diameter. An upper discharge electrode face 123 is formed at the tip portion of the cylindrical shape having small diameter, and a concave portion 127 is formed on the upper discharge electrode face 123 for generating a stable discharge.

Similarly, the lower discharge electrode 124 protrudes from the cap portion 128 toward the center position of the airtight cylinder 110, and its tip portion is formed in a cylindrical shape having small diameter. A lower discharge electrode face 125 is formed at the tip portion of the cylindrical shape having small diameter, and a concave portion 127 is also formed on the lower discharge electrode face 125 for generating a stable discharge. On the upper discharge electrode face 123 and the lower discharge electrode face 125 is applied copper plating, for example.

Discharge of the discharge tube 100 is generated at a discharge gap 129 as a separated portion between the upper discharge electrode face 123 and the lower discharge electrode face 125 in the discharge space 100a.

Lead wires 112, 114 are respectively connected to the upper discharge electrode 122 and the lower discharge electrode 124 for easy connection of the discharge tube 100 with another device.

Furthermore, a variety of materials may be used for a discharge tube. In addition to the structure described above, a discharge tube made of glass is proposed, for example. In this case, coating for breakage prevention is applied to a surface of the glass so as to prevent possible breakage of glass when the glass is mounted on a board by an insert machine (for example, refer to JP-A-9-63742).

In many cases, discharge tube has been used in a device placed indoors where environmental condition around the discharge tube does not change largely. However, recently, environments in which the discharge tube is used are not limited to certain conditions but may be diverse such as the discharge tube used for a vehicle headlight. A predetermined electrical characteristic may not be obtained under harsh conditions.

For example, in a case where the discharge tube is used under a condition of high temperature and high humidity, moisture may adhere to the airtight cylinder shown in Figs. 6 and 7, thus deteriorating an insulation resistance and an electrical characteristic (switching characteristic) of the airtight cylinder. Moreover, in case where a sudden change occurs in an external temperature, the airtight cylinder may produce dew condensation and the adhered moisture may deteriorate the insulation resistance.

EP0602927A1 discloses that high pressure sodium arc vapour discharge lamps that employ an alumina arc tube exhibit less voltage rise and better lumen maintenance over the life of the lamp when the arc tube is coated with an oxide of a metal selected from the group consisting essentially of yttrium, zirconium, hafnium, lanthanum, dysprosium, scandium and mixture thereof.

JP03283335A discloses a sealed container provided in such a manner as enclosing two main electrodes therein is covered at its outer surface except the terminal portions of the main electrodes with an insulating material, i.e., the sealed container made of ceramics is sealed and stuck to the electrode and a welding ring in advance and the welding ring and the electrode are electrically welded to each other in the atmosphere of a high pressure inactive gas during assembly of a discharge tube and the ceramics sealed container is coated at its outer surface with the insulating material of good adhesion such as epoxy resins, etc., and so can withstand high pressure. A high-voltage discharge tube having atmospheric gas of pressure higher than atmospheric pressure sealed therein is thus obtained.

JP03283336A discloses porous ceramics coated with glass is used to form a sealed container provided in such a manner as enclosing two main electrodes disposed opposite to each other; i.e., the electrodes are heated and sealed to both cut pipe surfaces of the tubular sealed container by a sealing material of gold or silver solder, etc., whose melting point is lower than that of the ceramics, the tubular being made of the porous ceramics of a low dielectric constant and coated with glass whose coefficient of thermal expansion is near to that of the electrodes. Airtightness of the sealed container is thereby held high and also the interelectrode electrostatic capacity of a discharge tube is made smaller.

JP S59 68165 A (MATSUSHITA ELECTRONICS CORP) 18 April 1984 (1984-04-18), discloses a high pressure sodium discharge lamp, with a cylindrical ceramic vessel and a coating film 4 formed on a surface of the vessel. The coating film 4 has a thickness of 0.3 mm and consists of aluminosilicate glass mixed with Al2O3. EP 1 555 685 A2 (GEN ELECTRIC [US]) 20 July 2005 (2005-07-20), discloses a metal halide lamp, with a cylindrical ceramic vessel 12; and a light-transmitting and UV-reflecting multilayer coating film 40 formed on a surface of the vessel 12. The coating film 40 consists SiO2 layers 'L' alternating with Ta2O5 layers 'H'.

### SUMMARY OF THE INVENTION

An object of the invention is to provide a novel and useful discharge tube that has solved the above problems.

In some implementations, the present invention provides a discharge tube capable of performing a stable discharge having a good insulating property between discharge electrodes even when the external environment changes.

According to the invention there is provided, a discharge tube as set out in claim 1.

According to the discharge tube of the present invention, it is possible to perform a stable discharge having a good insulating property between the discharge electrodes even when the external environment changes.

### BRIEF DESCRIPTION OF THE DRAWINGS

Fig. 1 is a cross-sectional view of a discharge tube according to a first embodiment.
Fig. 2 shows an external appearance of a discharge tube according to a first embodiment.
Fig.3 shows differences in resistance values of discharge tubes having differences in coating.
Fig. 4 shows differences in discharge characteristics of discharge tubes having differences in coating.
Fig. 5A shows a state of a voltage obtained when successive discharge is performed with a discharge tube.
Fig. 5B shows a state of a voltage obtained when successive discharge is performed with a discharge tube.
Fig. 6 is a cross-sectional view of a discharge tube used in the related art.
Fig. 7 shows an external appearance of a discharge tube used in the related art.

### DESCRIPTION OF THE PRFERRED EMBODIMENTS

An embodiment of the invention will be described referring to drawings.

### [First Embodiment]

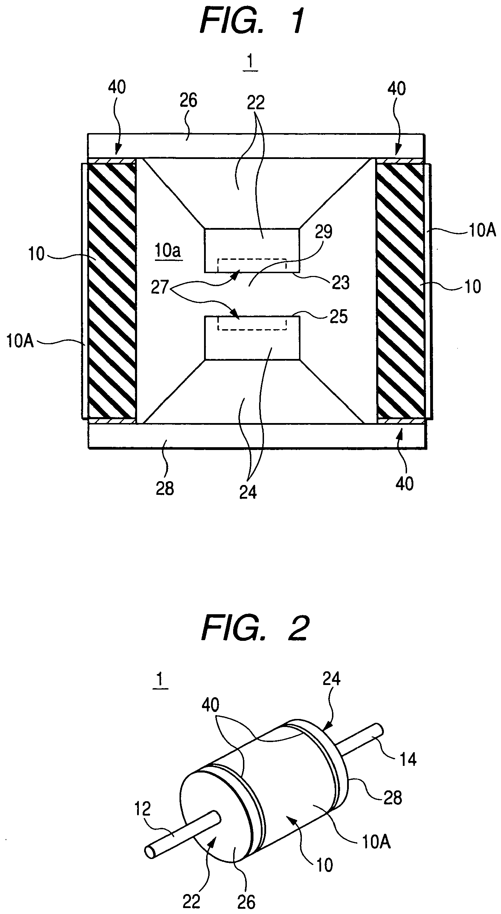

Figs. 1 and 2 show a discharge tube 1 as an exemplary discharge tube according to the first embodiment of the invention. Fig. 1 is a cross-sectional view of the discharge tube 1. Fig. 2 is a perspective view showing an external appearance of the discharge tube 1.

Referring to Figs. 1 and 2, the discharge tube 1 includes an airtight cylinder 10, an upper discharge electrode 22, a lower discharge electrode 24, filler gas, and the like. The airtight cylinder 10 in which a discharge space is formed has a cylindrical shape, and is formed of a light transmitting ceramic material.

The upper discharge electrode 22 and the lower discharge electrode 24 are attached at a top end opening and a bottom end opening of the airtight cylinder 10 respectively. The upper discharge electrode 22 and the lower discharge electrode 24 are integrally formed with a disc-shaped cap portion 26 and a disc-shaped cap portion 28, respectively.

A metalized face 40 is formed at the top end opening and the bottom end opening of the airtight cylinder 10. The cap portions 26 and 28 formed at the upper discharge electrode 22 and lower discharge electrode 24 are brazed to the metalized face 40 formed at each opening of the airtight cylinder 10. Thus, the upper discharge electrode 22 and the lower discharge electrode 24 are attached to the airtight cylinder 10. When they are attached together, filler gas is sealed in the airtight cylinder 10. In this way, the discharge space 10a where the filler gas is sealed is formed in the airtight cylinder 10 by the airtight cylinder 10, the upper discharge electrode 22 and the lower discharge electrode 24.

The upper discharge electrode 22 protrudes from the cap portion 26 toward a center position of the airtight cylinder 10, and its tip portion is formed in a cylindrical shape having small diameter. An upper discharge electrode face 23 is formed at the tip portion of the cylindrical shape having small diameter, and a concave portion 27 is formed on the upper discharge electrode face 23 for generating a stable discharge.

Similarly, the lower discharge electrode 24 protrudes from the cap portion 28 toward the center position of the airtight cylinder 10, and its tip portion is formed in a cylindrical shape having small diameter. A lower discharge electrode face 25 is formed at the tip portion of the cylindrical shape having small diameter, a concave portion 27 is also formed on the lower discharge electrode face 25 for generating a stable discharge. On the upper discharge electrode face 23 and the lower discharge electrode face 25 is applied copper plating, for example.

Discharge of the discharge tube 1 is generated at a discharge gap 29 as a separated portion between the upper discharge electrode face 23 and the lower discharge electrode face 25 in the discharge space 10a.

Lead wires 12, 14 are respectively connected to the upper discharge electrode 22 and the lower discharge electrode 24 for easy connection of the discharge tube 1 with another device.

The discharge tube 1 according to this embodiment uses 42 alloy, Kovar, an iron-nickel-chromium alloy, etc. as a material of the upper and lower discharge electrodes 22, 24. In addition, the copper plating is applied to the upper discharge electrode face 23 and the lower discharge electrode face 25 of the upper and lower discharge electrodes 22, 24. A thickness of the copper plating is desirably about some micrometers to 20 micrometers.

As mentioned above, the airtight cylinder 10 is formed of an insulating light transmitting ceramic material (for example, an alumina ceramics), and the upper discharge electrode 22 and the lower discharge electrode 24 are brazed to the airtight cylinder 10. Thus, by using 42 alloy, Kovar, the iron-nickel-chromium alloy, etc. having a small difference in thermal expansion coefficient from ceramic as the material of the upper discharge electrode 22 and the lower discharge electrode 24, a secure brazing is possible and the reliability of the discharge tube 1 can be enhanced.

However, in the related art, in a case where the discharge tube is used under a condition of high temperature and high humidity, moisture may adhere to a surface of the airtight cylinder 10. Then, the insulating property between the upper discharge electrode 22 and the lower discharge electrode 24 is deteriorated, whereby changing the discharge characteristic of the discharge tube. For example, in a case where the discharge tube is formed of the ceramic material or the like, moisture is likely to adhere to the airtight cylinder 10, causing the deterioration of the insulating property, since the ceramic material has fine unevenness on its surface and is a porous material from a microscopic point of view.

In the discharge tube 1 according to the invention, a coating film 10A which is made of an insulating lacquer material and is resistant to water permeation is formed on the surface of the airtight cylinder 10, in this embodiment on an opposite side of a side where the discharge is generated, that is, on a side of the airtight cylinder 10 facing the atmosphere. Therefore, good insulating property between the upper discharge electrode 22 and the lower discharge electrode 24 can be achieved, and the stable discharge can be maintained.

For example, forming the coating film 10A on the surface of the airtight cylinder 10 provides an advantage that the coating film 10A permeates the unevenness or fine holes on the surface of the ceramic material, and fills portions where the moisture is likely to adhere, so as to suppress the adhesion of the moisture. Further, the coating film is resistant to water permeation so as to prevent invasion of the moisture.

Thus, when the discharge tube is used in an environment of high temperature and high humidity or in an environment where the temperature changes wildly and dew condensation is likely to occur, deterioration of the insulating property of the airtight cylinder is suppressed, thereby generating a stable discharge. According to the invention, as a material of the coating film 10A, a lacquer material (ethyl acetate being its principal material) is used.
Such a coating film may be of various specifications such as being cured at normal temperature (normal temperature curing type), being cured by heat (heat curing type), or being cured by ultraviolet irradiation (UV curing type), after the material for coating is applied to the surface of the airtight cylinder 10, for example.

The coating film 10A is made of a light transmitting material. The reason is described below. When light stops entering the discharge space 10a, photoelectrons are not generated in the discharge space, which disturbs the generation of discharge due to the change in the discharge state. By forming the coating film 10A with the light transmitting material, stable discharge is generated in the discharge space 10A, thus eliminating the influence of the interception of light. Moreover, it is further possible to read product management information such as a serial number printed on the airtight cylinder 10, for example, thus facilitating management of a product. According to the invention, the coating film 10A transmits equal to or more than 50 percent of light in the visible light range for the stable discharge. Further according to the invention, the thickness of the coating film 10A is equal to or more than 1 micrometer. This is because such a thickness is preferable to fill the unevenness on the surface of the ceramic material and maintain a sufficient insulating property. On the other hand, the thickness of the coating film 10A is equal to or less than 500 micrometers. This is because in this case, a thicker coating film does not contribute to the stable discharge.

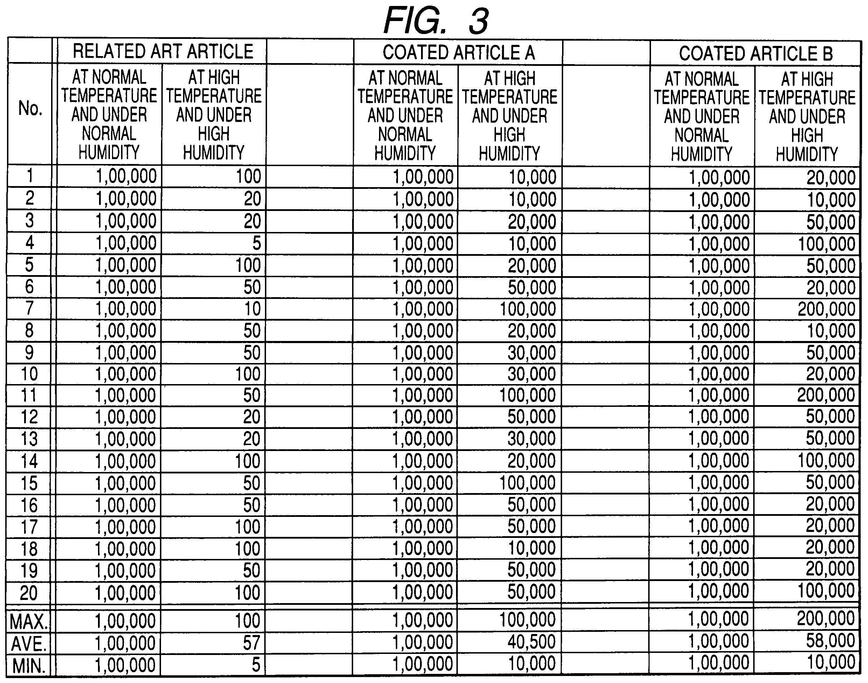

Next, a result of a measurement of an electric resistance of the discharge cylinder 10 of the discharge tube 1 is shown in Fig. 3. Fig. 3 shows a reference example where a coated article A uses a fluorine material as the material of the coating film 10A, and an embodiment according to the invention where a coated article B uses a lacquer material as the material of the coating film 10A. For comparison, an electric resistance obtained when no coating is applied to a discharge cylinder is given as a related art article.

In the experiment, 20 samples are prepared for each case and resistance values are measured for the 20 samples. Moreover, for each case, the measurement is performed in a condition where the outside air is at normal temperature and under normal humidity (temperature: 26°C; humidity: 42%), and a condition where the outside air is at high temperature and under high humidity (temperature: 40°C; humidity: 90%), and the results are compared with each other. Here, a unit of the resistance value in the figure is "megohm", and an upper limit measurement value of a measuring instrument is 1000000 megohm.

Referring to Fig. 3, the measurement result of the related art article to which no coating is applied shows a considerable drop in the resistance value concerning the average value of the 20 samples, since the resistance value obtained at high temperature and under high humidity is about 0.057 percent of that obtained at normal temperature and under normal humidity.

On the other hand, in the measurement results of the coated article A and the coated article B, although the resistance value decreases in the condition of high temperature and high humidity compared to the condition of normal temperature and normal humidity, the rate of the decrease in the resistance value is suppressed as compared to the related art article. For example, in the case of the coated article A, concerning the average value of the 20 samples, the resistance value obtained at high temperature and under high humidity is about 710 times as large as that of the related art article. Furthermore, in the case of the coated article B, concerning the average value of the 20 samples, the resistance value obtained at high temperature and under high humidity is about 1018 times as large as that of the related art article.

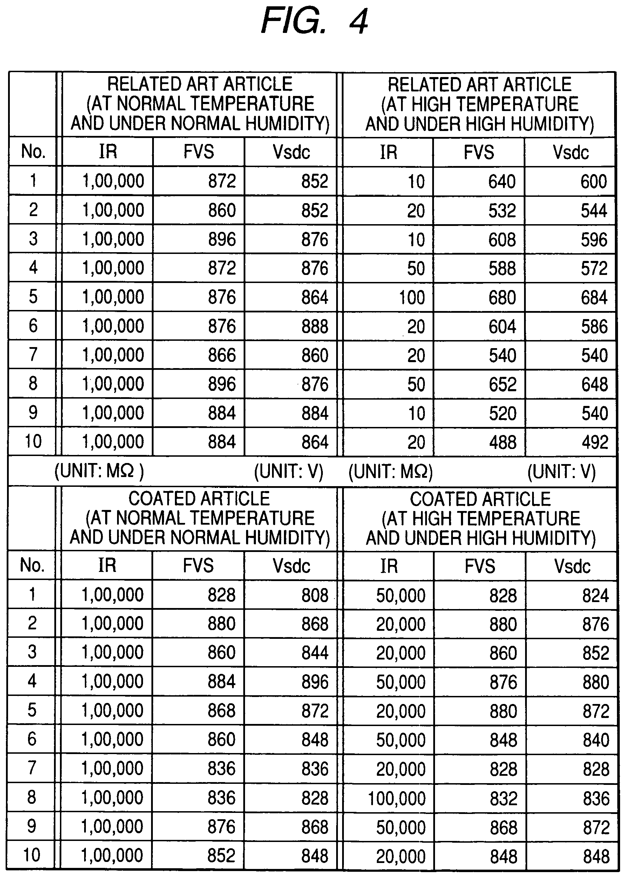

Fig. 4 shows a result of comparison of discharge characteristics obtained by applying voltage between electrodes and successively generating discharge between the electrodes in the cases of the related art article and the coated article B. In the figure, IR represents a resistance value, FVs represents the voltage at a first discharge, and Vsdc represents the voltage at a second discharge. Experiment is conducted for 10 samples of discharge tubes respectively in the cases of the related art article and the coated article B, in a case of normal temperature and normal humidity and a case of high temperature and high humidity.

Referring to Fig. 4, in the case of the related art article, the resistance value considerably drops in the case of high temperature and high humidity compared to the case of normal temperature and normal humidity, as mentioned earlier. Also, both the first discharge voltage and the second discharge voltage are decreased.

For example, taking the first discharge voltage as an example, the voltage obtained at normal temperature and under normal humidity is 860V to 896V while the voltage obtained at high temperature and under high humidity is as low as 488V to 680V. The second discharge shows a similar tendency.

On the other hand, in the case of the coated article, both the first discharge voltage and the second discharge voltage are slightly decreased in the case of high temperature and high humidity compared to the case of normal temperature and normal humidity. This shows that the change in the discharge characteristic associated with the change of environment where the discharge tube is used is suppressed.

For example, taking the first discharge voltage as an example, the voltage obtained at normal temperature and under normal humidity is 828V to 884V while the voltage obtained at high temperature and under high humidity is 828V to 880V, which shows that substantially the same voltage is maintained. The second discharge shows a similar tendency.

This may be because the deterioration of the insulating property of the airtight cylinder is suppressed by applying the coating on the surface of the airtight cylinder, and in particular, the decrease of the resistance value in the case of high temperature and high humidity, and the associated change in the discharge characteristic (switching characteristic) are suppressed.

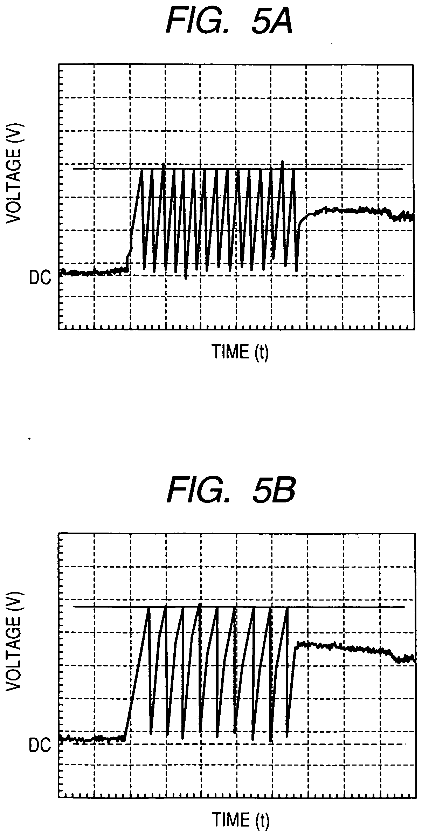

Next, Figs. 5A and 5B show a state of a voltage obtained in a case where successive discharge is performed in the case of high temperature and high humidity shown in Fig. 4 with respect to the related art article and the coated article (the coated article B). Fig. 5A shows the case of the related article, and Fig. 5B shows the case of the coated article. Here, a single cell represents 200V on the vertical axis, and 25ms on the horizontal axis.

Referring to Figs. 5A and 5B, the discharge voltage is about 640mV in the case of the related art article shown in Fig. 5A, while it is about 840V in the case of the coated article shown in Fig. 5B. This shows that the discharge voltage is maintained high in the case of the coated article.

In this way, stable discharge is successively available in an environment such as of high temperature and high humidity. Thus, the discharge tube according to this embodiment provides an advantage that the discharge characteristic is more stable than the related art article, when mounted on a vehicle that is subjected to changes in the surrounding environment, for example.

For this reason, the discharge tube according to this embodiment is preferably used as a discharge tube (sometimes referred to as a switching discharge tube) for generating a power supply pulse in an ignition circuit in an HID or the like for generating a high-voltage trigger used to start discharge.

The discharge tube according to this embodiment is not limited to the above case but may be used in a circuit used to illuminate a backlight of a projector and a variety of other circuits.

## Claims

1. A discharge tube comprising:
a pair of electrodes (22,24) opposed to each other with a discharge space in-between;
an airtight cylinder (10) in which the discharge space is formed, the pair of the electrodes respectively being mounted on both ends of the airtight cylinder, wherein the airtight cylinder (10) is made of a light transmitting ceramic material; and
a coating film (10A) formed on a surface of the airtight cylinder,
wherein the coating film is resistant to water permeation so as to prevent invasion of moisture, and
the material of the coating film is a lacquer material, and is a light transmitting material that transmits equal to or more than 50 percent of light in the visible light range, and
the coating film has a thickness from 1µm to 500 µm.

## Patentansprüche

1. Entladungsröhre umfassend:
ein einander gegenüberliegendes Elektrodenpaar (22, 24) mit einem Entladungsraum dazwischen;
einen luftdichten Zylinder (10), in dem der Entladungsraum gebildet ist, wobei das Elektrodenpaar jeweils an beiden Enden des luftdichten Zylinders angeordnet ist, wobei der luftdichte Zylinder (10) aus einem lichtdurchlässigen Keramikmaterial gefertigt ist; und
einen Beschichtungsfilm (10A), der auf einer Oberfläche des luftdichten Zylinders gebildet ist,
wobei der Beschichtungsfilm beständig gegenüber Wasserdurchlässigkeit ist, um das Eindringen von Feuchtigkeit zu vermeiden, und
das Material des Beschichtungsfilms ein Lackmaterial ist und ein lichtdurchlässiges Material ist, das gleich oder mehr als 50 Prozent des Lichts im sichtbaren Lichtbereich durchlässt, und
der Beschichtungsfilm eine Dicke von 1 µm bis 500 µm aufweist.

## Revendications

1. Tube de décharge comportant:
deux électrodes (22, 24) opposées l'une à l'autre et séparées par un espace de décharge;
un cylindre étanche à l'air (10) dans lequel est formé l'espace de décharge, les deux électrodes étant respectivement montées aux deux extrémités du cylindre étanche à l'air, **caractérisé en ce que** le cylindre étanche à l'air (10) est fabriqué en une matière céramique légère laissant passer la lumière; et
une couche de revêtement (10A) formée à la surface du cylindre étanche à l'air,
**caractérisé en ce que** la couche de revêtement résiste à la pénétration de l'eau empêchant ainsi la présence d'humidité, et
le matériau de fabrication de la couche de revêtement est une laque laissant passer la lumière qui transmet 50 pour cent ou davantage de lumière dans le spectre de lumière visible, et
la couche de revêtement est d'une épaisseur comprise entre 1 µm et 500 µm.
